# EUROPÄISCHE PATENTSCHRIFT

(11) **EP 0 794 970 B1**
(45) Veröffentlichungstag und Bekanntmachung des Hinweises auf die Patenterteilung: **09.09.1998**
(21) Anmeldenummer: 95937711.0
(22) Anmeldetag: 23.11.1995
(51) Int. Cl.: C08F 220/28, C09D 133/14, C08F 8/32

(54) **VERFAHREN ZUR ZWEISTUFIGEN HERSTELLUNG VON WÄSSRIGEN, SELBSTVERNETZENDEN COPOLYMERISATDISPERSIONEN UND DEREN VERWENDUNG FÜR LACKE**
TWO-STAGE METHOD FOR THE PREPARATION OF AQUEOUS SELF-CROSSLINKING COPOLYMER DISPERSIONS AND USE OF SUCH DISPERSIONS IN PAINTS
PROCEDE DE PREPARATION EN DEUX ETAPES DE DISPERSIONS AQUEUSES DE COPOLYMERES AUTORETICULANTS ET LEUR UTILISATION POUR DES PEINTURES

(30) Priorität: 29.11.1994 AT 2210/94; 08.11.1995 AT 1833/95
(43) Veröffentlichungstag der Anmeldung: 17.09.1997
(73) Patentinhaber: Vianova Resins Aktiengesellschaft, 8402 Werndorf (AT)
(72) Erfinder: KRIESSMANN, Ingo, A-8010 Graz (AT); AWAD, Rami-Raimund, A-8042 Graz (AT); GSÖLL, Hannelore, A-8055 Graz (AT); GOSSAK, Kurt, A-8042 Graz (AT); HIRSCHMANN, Bernhard, A-8200 Gleisdorf (AT)
(86) Internationale Anmeldenummer: AT9500227
(87) Internationale Veröffentlichungsnummer: WO9616998

(56) Entgegenhaltungen:
- EP-A- 0 555 774
- WO-A-94/09045

## Beschreibung

Die Erfindung betrifft ein zweistufiges Verfahren zur Herstellung von wäßrigen, selbstvernetzenden Copolymerisatdispersionen auf der Basis von Acetoacetyl- und Carboxylgruppen aufweisenden Acrylatcopolymerisaten, welche mit als Vernetzungskomponente wirkenden Polyaminen neutralisiert sind, und ihre Verwendung als Bindemittel für lagerstabile Einkomponentenlacke sowie in Kombination mit niedermolekularen Polyisocyanaten als Bindemittel für Zweikomponentenlacke, welche bei Raumtemperatur oder bei erhöhter Temperatur vernetzen.

Aus der EP 0555774 A1 ist ein einstufiges Verfahren zur Herstellung derartiger Copolymerisatdispersionen bekannt. Die Produkte haben jedoch einen Nachteil. Einerseits ist zur Erzielung einer ausreichenden Vernetzungsdichte der Lackfilme ein hoher Anteil an Acetoacetylgruppen erforderlich, andererseits bewirkt dieser hohe Anteil an entsprechenden Monomeren während der Copolymerisation die Bildung von Stippen und Koagulaten, die nur unter großem zeitlichen und apparativen Aufwand wieder entfernt werden können.

Überraschenderweise wurde nun gefunden, daß auch Filme wäßriger Copolymerisatdispersionen mit geringen Anteilen an Acetoacetylgruppen eine hohe Vernetzungsdichte aufweisen, wenn die Emulsionscopolymerisation nach einem zweistufigen Verfahren erfolgt, wobei jeweils Acetoacetyl- oder Carboxylgruppen aufweisende Monomere nur in der ersten Stufe eingesetzt werden.

Die Erfindung betrifft demgemäß ein Verfahren zur Herstellung von wäßrigen, selbstvernetzenden Copolymerisatdispersionen, die
- (Aa): 3 bis 35 Gew.-%, vorzugsweise 8 bis 15 Gew.-%, Acetoacetylgruppen aufweisende (Meth) acrylatmonomere,
- (Ab): 1 bis 20 Gew.-%, vorzugsweise 3 bis 16 Gew.-%, α,β-ethylenisch ungesättigte Carbonsäuren, vorzugsweise (Meth)acrylsäure,
- (Ac): 11 bis 96 Gew.-%, vorzugsweise 30 bis 70 Gew.-%, (Meth) acrylsäurealkylester sowie gegebenenfalls Diester der Malein- oder Fumarsäure und
- (Ad): 0 bis 40 Gew.-%, vorzugsweise 0 bis 25 Gew.-%, andere radikalisch polymerisierbare Monomere, wie Vinylaromaten, Vinylester, Hydroxyalkyl(meth) acrylate und (Meth)acrylamid
als Monomeren-Zusammensetzung aufweisen, wobei die Summe der Prozentzahlen der Komponenten (Aa) bis (Ad) 100 ergeben muß, und die mit als Vernetzungskomponente wirkenden Polyaminen neutralisiert sind, welches dadurch gekennzeichnet ist, daß man
A) eine zweistufige, radikalische Emulsionpolymerisation durchführt, mit der Maßgabe, daß in der ersten Stufe 60 bis 90 Gew.-% eines Gemisches aus den Monomeren (Aa) bis (Ad) und in der zweiten Stufe 10 bis 40 Gew.-% eines Gemisches aus den Monomeren (Ac) und (Ad) copolymerisiert werden, wobei die Summe der Prozentzahlen wiederum 100 ergeben muß und die Bedingung gilt, daß die Acrylatcopolymerisate (A) Acetoacetylgruppen in einer Menge von 0,2 bis 1,7 Mol/kg, vorzugsweise von 0,4 bis 0,8 Mol/kg, und Carboxylgruppen in einer Menge von 0,15 bis 1,6 Mol/kg, vorzugsweise von 0,4 bis 0,75 Mol/kg, aufweisen, und daß die Carboxylgruppen in einer Menge von 50 bis 95 Mol-%, vorzugsweise von 80 bis 90 Mol-%, bezogen auf die Acetoacetylgruppen, vorliegen,
und anschließend
B) die Carboxylgruppen der Copolymerisatdispersionen (A) mit Polyaminen, die mindestens zwei primäre Aminogruppen im Molekül aufweisen, in einem Anteil von 50 bis 100 Mol-%, vorzugsweise von 90 bis 100 Mol-%, bezogen auf die gesamten primären Aminogruppen, unter Salzbildung umsetzt.

Die Erfindung betrifft weiters die erfindungsgemäß hergestellten Copolymerisatdispersionen und deren Verwendung als Bindemittel für lagerstabile Einkomponentenlacke sowie in Kombination mit niedermolekularen Polyisocyanaten als Bindemittel für Zweikomponentenlacke, welche bei Raumtemperatur oder bei erhöhter Temperatur vernetzen.

Die primären Polyamine dienen als Neutralisationsmittel zur Stabilisierung der wäßrigen Copolymerisatdispersionen und schließlich als Vernetzungskomponente während der Filmbildung.

Die Copolymerisatdispersionen werden erfindungsgemäß nach dem Verfahren einer zweistufigen radikalischen Emulsionscopolymerisation in bekannter Weise hergestellt. Dabei werden die im Hauptanspruch definierten Monomerenkomponenten Aa) bis Ad) in den angegebenen Mengenverhältnissen eingesetzt.

Als Monomerenkomponente (Aa) werden Acetoacetylgruppen aufweisende (Meth)acrylatmonomere, wie N-Diaceton (meth)acrylamid, oder (Meth)acrylsäureacetoacetoxyalkylester, vorzugsweise der Ethylester, verwendet.

Als Monomerenkomponente (Ad) seien beispielsweise für Vinylaromaten Styrol und p-Methylstyrol und für Vinylester Vinylacetat genannt.

Es gilt die Bedingung, daß die Acrylatcopolymerisate (A) Acetoacetylgruppen in einer Menge von 0,2 bis 1,7 Mol/kg, vorzugsweise von 0,4 bis 0,8 Mol/kg, und Carboxylgruppen in einer Menge von 0,15 bis 1,6 Mol/kg, vorzugsweise von 0,4 bis 0,75 Mol/kg, enthalten, und daß die Carboxylgruppen in einer Menge von 50 bis 95 Mol-%, vorzugsweise von 80 bis 90 Mol-%, bezogen auf die Acetoacetylgruppen, vorliegen.

Anschließend werden die Carboxylgruppen der Copolymerisatdispersionen (A) mit Polyaminen, die mindestens zwei primäre Aminogruppen im Molekül aufweisen, in einem Anteil von 50 bis 100 Mol-%, vorzugsweise von 90 bis 100 Mol-%, bezogen auf die gesamten primären Aminogruppen, unter Salzbildung umgesetzt.

Beispiele für Polyamine sind Alkylendiamine, wie Ethylendiamin und dessen Homologe und Isomere, weiters diprimäre Polyalkylenpolyamine, wie Diethylentriamin, und andere Polyamine, wie Trimethylolpropanhexaethoxytriamin oder diprimäre Polyethoxydiamine.

Die erfindungsgemäß hergestellten Copolymerisatdispersionen haben eine ausgezeichnete Lagerstabilität und ergeben Filme mit guten Beständigkeitseigenschaften. Sie können als Bindemittel für Industrielacke und Grundierungen eingesetzt werden. Weiters lassen sich mit ihnen Klarlacke formulieren, die zur Beschichtung von Holz, Kunststoff, Leder oder Papier verwendet werden.

Die Vernetzung der Copolymerisatdispersionen erfolgt durch Umsetzung der primären Aminogruppen der Polyamine mit den Ketogruppen der Acetoacetylgruppen der Copolymerisatdispersionen (A) bereits bei Raumtemperatur nach dem Abdunsten eines wesentlichen Anteils des Wassers.

Unter der Voraussetzung, daß als Monomerenkomponente (Ad) Hydroxyalkyl (meth) acrylate mitverwendet werden, können die Copolymerisatdispersionen auch mit niedermolekularen Polyisocyanaten vorteilhaft kombiniert werden.

Als Polyisocyanate werden handelsübliche Oligomere, beispielsweise Isocyanurate, Biuret- oder Allophanattypen aliphatischer Diisocyanate, wie Hexamethylen-, Isophoron- oder Dicyclohexylmethandiisocyanat, in einem Bindemittel-Polyisocyanatverhältnis von 90 : 10 bis 60 : 40 (auf Feststoff bezogen) eingesetzt.

Derartige Zweikomponentenlacke weisen relativ lange pot-life-Zeiten und im Vergleich zu Einkomponentenlacken als Lackfilme nach einer Trocknungszeit von 4 Wochen neben der zu erwartenden höheren Vernetzungsdichte eine deutlich verringerte Tendenz zur Gelbverfärbung heller Hölzer auf.

Die Formulierung von wasserverdünnbaren Lacken unter Verwendung der erfindungsgemäß hergestellten Bindemittel und die Applikation derartiger Lacke sind dem Fachmann bekannt.

Die folgenden Beispiele erläutern die Erfindung, ohne sie in ihrem Umfang zu beschränken. Alle Angaben in Teilen oder Prozenten beziehen sich, soweit nicht anders angegeben, auf Gewichtseinheiten.

### 1. Beispiele 1 bis 7 und Vergleichsbeispiel V1

### Beispiel 1

In einem für die Emulsionscopolymerisation geeigneten Reaktor mit Rückflußkühler, Thermometer und zwei Zulaufgefäßen wird eine Mischung aus 360 Tlen demineralisiertem Wasser, 24 Tlen Triton X 200 (Natriumalkylarylpolyethersulfonat, Hersteller: Rohm & Haas, USA) und 5,4 Tlen Triton X 165 (Octylphenolethoxylat, Hersteller: Rohm & Haas, USA) unter Rühren homogenisiert.

Das Zulaufgefäß I wird mit einer homogenen Emulsion, bestehend aus 1150 Tlen demineralisiertem Wasser, 24 Tlen Triton X 200, 10 Tlen Triton X 165, 3,2 Tlen Ammoniumperoxodisulfat, 165 Tlen Butylmethacrylat, 280 Tlen Butylacrylat, 275 Tlen Styrol, 140 Tlen Acetoacetoxyethylmethacrylat und 40 Tlen Methacrylsäure beschickt. 5 % dieser Voremulsion werden in den Reaktor abgelassen. Der Reaktorinhalt wird unter Rühren auf 85°C erwärmt und 10 Minuten bei dieser Temperatur gehalten. Sodann wird der verbleibende Inhalt des Zulaufgefäßes I während 120 min bei 85°C gleichmäßig in den Reaktor dosiert.

Anschließend wird aus dem Zulaufgefäß II eine homogene Emulsion aus 100 Tlen demineralisertem Wasser, 3,1 Tlen Triton X 200, 2,4 Tlen Triton X 165, 30 Tlen Butylacrylat, 70 Tlen Styrol und 0,8 Tlen Ammoniumperoxodisulfat während 30 min bei 85°C zudosiert. Nach Zulaufende wird der Reaktorinhalt auf 88°C erwärmt und 120 min bei dieser Temperatur gehalten. Schließlich wird auf 25°C gekühlt und während einer Stunde werden 115 Tle einer 20%igen wäßrigen Diethylentriaminlösung unter Rühren zugegeben. Man erhält eine 38,8%ige opaleszierende Dispersion mit einer mittleren Teilchengröße von 90 Nanometern. Der pH-Wert beträgt 7,9.

Die Beispiele 2 bis 7 werden analog zu Beispiel 1 hergestellt. Die Zusammensetzungen der Reaktorvorlagen und der Zuläufe, sowie geänderte Polymerisationsparameter sind der Tabelle 1 zu entnehmen, in der folgende Abkürzungen verwendet werden:

| | |
|---|---|
| AAEMA | Acetoacetoxyethylmethacrylat |
| APS | Ammoniumperoxodisulfat |
| AS | Acrylsäure |
| BA | Butylacrylat |
| BMA | Butylmethacrylat |
| BV | Hostapal BV conc. (Hoechst AG, DE) |
| DAMA | Diacetonmethacrylamid |
| DBF | Dibutylfumarat |
| DETA | Diethylentriamin |
| DW | Demineralisiertes Wasser |
| EHA | 2-Ethylhexylacrylat |
| HBA | 4-Hydroxybutylacrylat |
| HDA | Hexamethylendiamin-1,6 |
| HEMA | 2-Hydroxyethylmethacrylat |
| MS | Methacrylsäure |
| pMST | p-Methylstyrol |
| ST | Styrol |
| X 165 | Triton X 165 (Rohm & Haas, USA) |
| X 200 | Triton X 200 (Rohm & Haas, USA) |
| X 305 | Triton X 305 (Rohm & Haas, USA) (Alkylarylpolyetheralkohol) |

### Vergleichsbeispiel V1

### Einstufige Copolymerisatdispersion mit hoher Acetoacetoxy-Funktionalität (entspricht dem Beispiel 7 der EP 0555774 A1)

In einem für die Emulsionspolymerisation geeigneten Reaktor werden 40 Tle DW sowie 27 Tle einer Flotte, welche 80 Tle DW, 100 Tle einer Mischung aus 45 Tlen AAEMA, 10,9 Tlen AS, 28,1 Tlen BA und 16 Tlen BMA, 0,5 Tlen Triton X 305, 1 Tl Dodecylsulfonat, 0,2 Tlen tert.-Dodecylmercaptan und 1 Tl APS enthält, auf 85°C erwärmt. Die verbleibenden 155,7 Tle der Flotte werden aus einem mit einem Rührer versehenen Zugabegefäß innerhalb von 2 Stunden gleichmäßig zugegeben. Der theoretische Feststoffgehalt von 45 % ist nach einer Nachreaktionszeit von 2 Stunden erreicht. Der Ansatz wird auf 25°C gekühlt und mit 31,2 Tlen einer 20%igen wäßrigen Lösung von DETA neutralisiert. Die einstufig hergestellte Copolymerisatdispersion enthält Anteile von Stippen und Koagulaten, welche durch Filtration entfernt werden müssen.

Die Kennzahlen für die gemäß den Beispielen 1 bis 7 und dem Vergleichsbeispiel V1 hergestellten Copolymerisatdispersionen sind in Tabelle 2 zusammengefaßt.

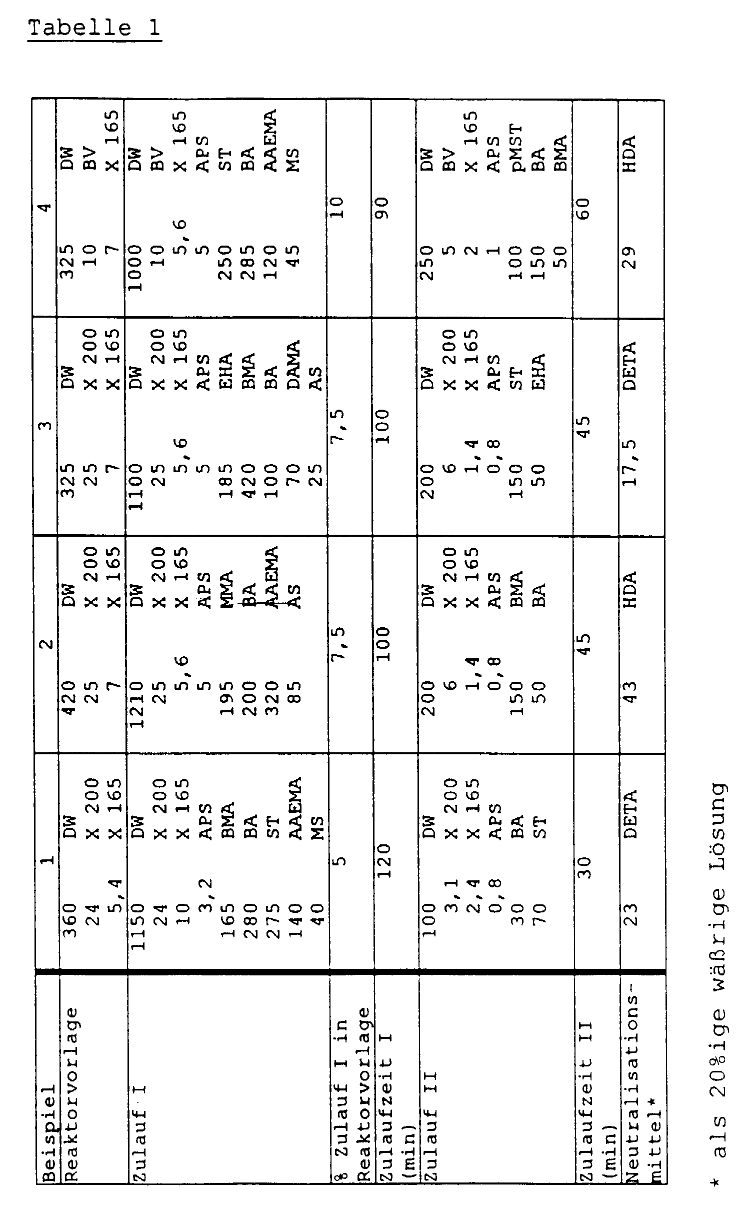

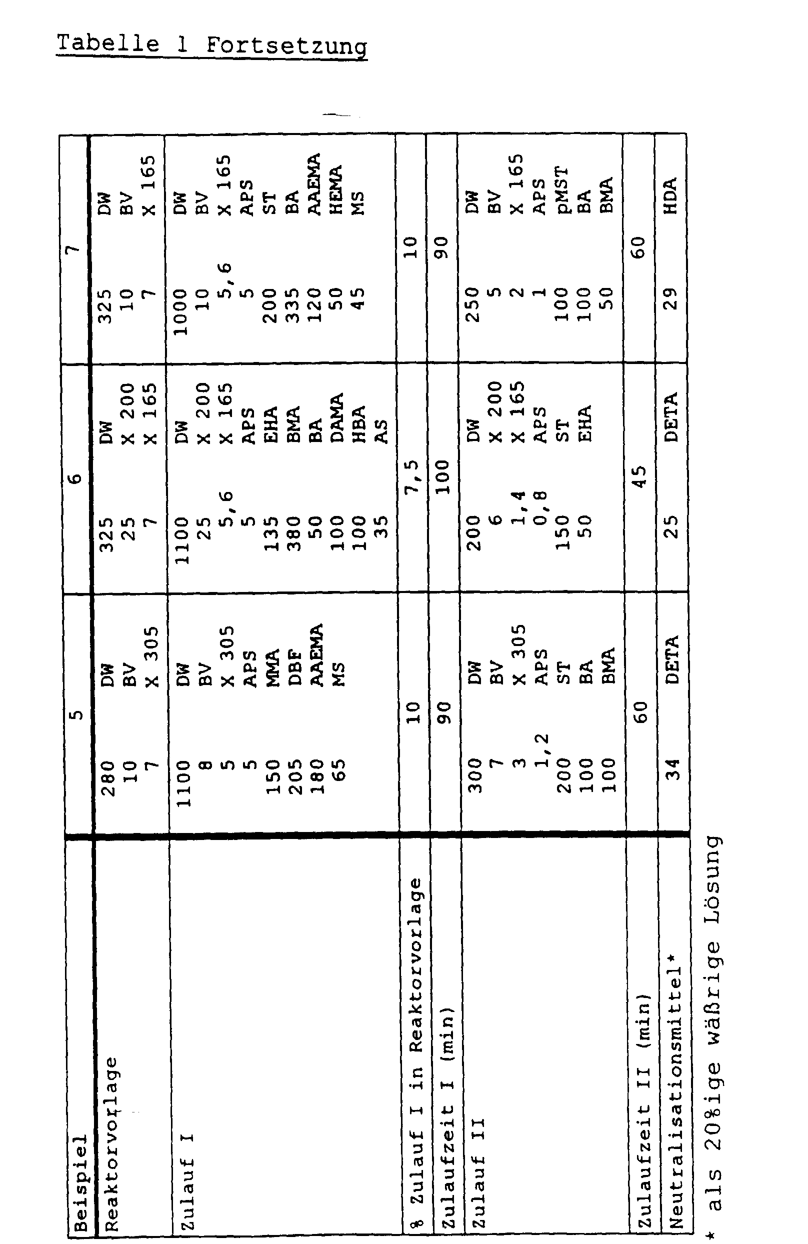

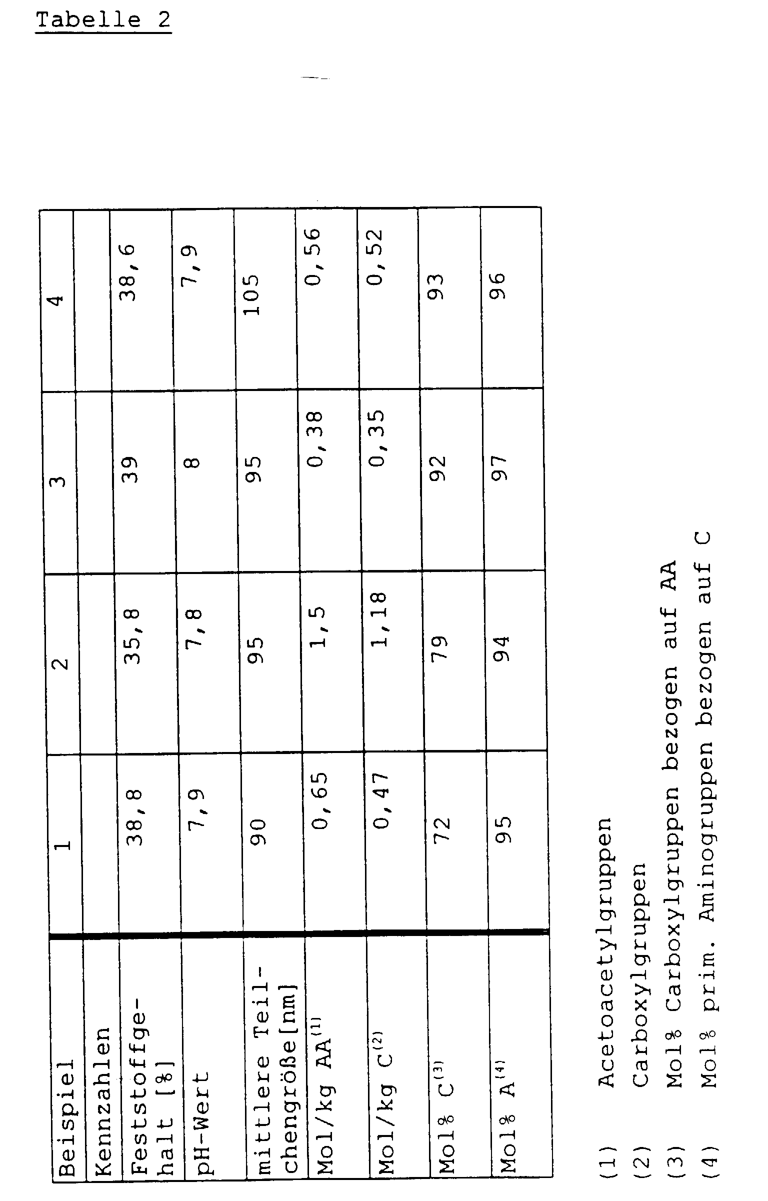

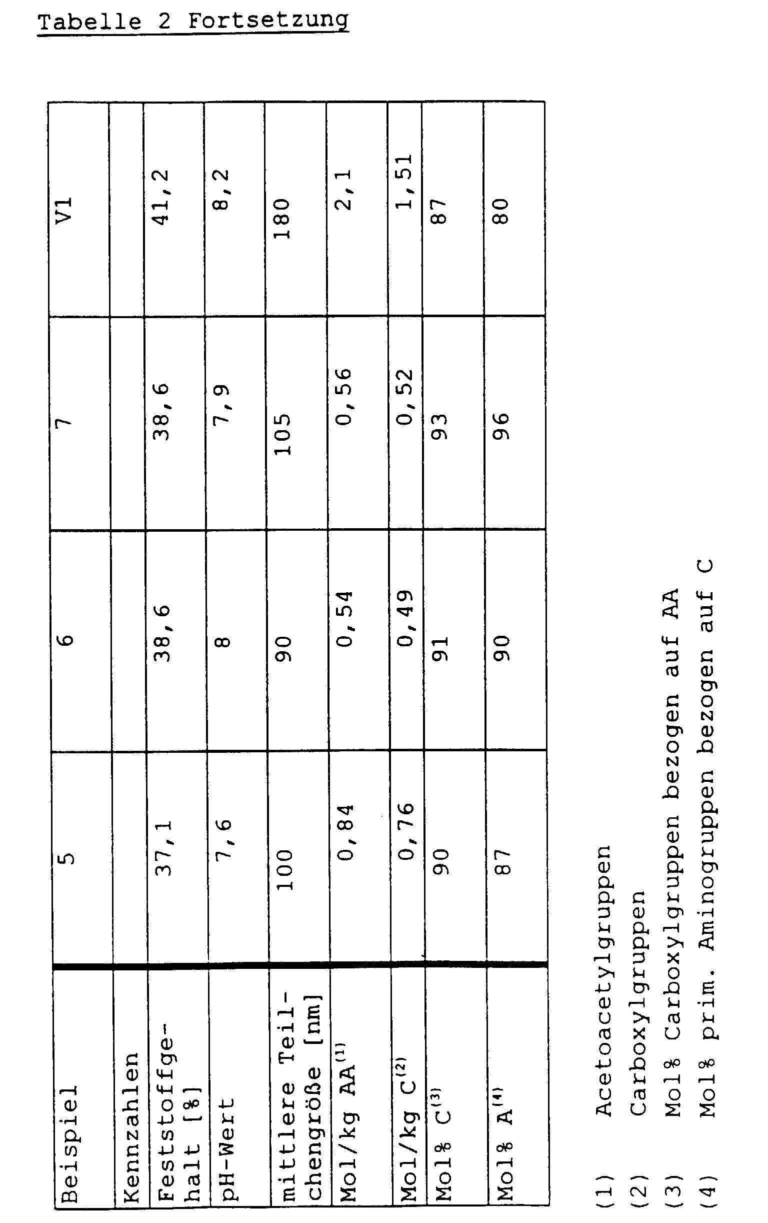

### 2. Lacktechnische Ausprüfung der gemäß den Beispielen 1 bis 5 und gemäß dem Vergleichsbeispiel V1 hergestellten Copolymerisatdispersionen in Klarlacken

Aus 100 Tlen Bindemittel (als Feststoff), 0,8 Tlen eines handelsüblichen Entschäumungsmittels, 0,2 Tlen eines handelsüblichen Verlaufsmittels, gegebenenfalls einem Rheologieadditiv (z.B. PUR-Verdicker) und deionisiertem Wasser wurden die Klarlacke 1 bis 5 und V1 hergestellt und diese folgenden lacktechnischen Prüfungen unterworfen, deren Ergebnisse in Tabelle 3 zusammengefaßt sind:

Klebfreiheit: Drying Recorder, Glasstreifen, 150 µm Naßfilm-Schichtstärke, bei 20°C (Angabe in Minuten)

Schleifbarkeit: furniertes Holz, 150 um Naßfilm-Schichtstärke, geprüft wird das Untersetzen von Schleifpapier (Körnung 320) nach 10 Hüben nach einer Trocknungszeit von 60 Minuten bei Raumtemperatur (0 = kein Untersetzen, MIN = Minimales Untersetzen.

Pendelhärte nach KÖNIG (DIN 53157): Glasplatten, 120 µm Naßfilm-Schichtstärke, Trocknungszeit von 24 Stunden bei 20°C.

Beständigkeiten gegen Aceton, Ethanol und Wasser: Glasplatten, 120 µm Naßfilm-Schichtstärke, Trocknungszeit von 24 Stunden bei 20°C. Ein mit dem Lösemittel getränkter Wattebausch wird auf den Lackfilm aufgelegt und mit einem Becherglas abgedeckt. Die Zeit bis zur Erweichung des Films wird gemessen.

**Tabelle 3**

| Klarlack | 1 | 2 | 3 | 4 | 5 | V1 |
|---|---|---|---|---|---|---|
| Klebfreiheit in Minuten | 20 | 15 | 20 | 15 | 20 | 15 |
| Schleifbarkeit | 0 | 0 | MIN | 0 | 0 | MIN |
| Pendelhärte in Sekunden | 65 | 80 | 90 | 65 | 60 | 45 |
| Acetonbeständigkeit in Sekunden | >60 | >60 | >60 | >60 | >60 | >60 |
| Ethanolbeständigkeit in Stunden | >2 | >2 | >2 | >2 | >2 | <0,25 |
| Wasserbeständigkeit in Stunden | >24 | >24 | >24 | >24 | >24 | <1 |

### 3. Lacktechnische Ausprüfung der gemäß den Beispielen 6 und 7 hergestellten Copolymerisatdispersionen in Klarlacken und in Zweikomponentenlacken

In Analogie zu den Klarlacken 1 bis 5 wurden die Klarlacke 6 und 7 hergestellt, zu denen pro 100 Tle jeweils 10 bzw. 20 Tle Bayhydurl® LS 2032 (Polyisocyanat auf Basis von Hexamethylendiisocyanat mit einem Gehalt an freien Isocyanatgruppen von ca. 17 % und einem Feststoffgehalt von 100 %, Hersteller: BAYER AG) zugesetzt wurden.
Zweikomponentenlacke (6a und 7a)
   Bindemittel: Polyisocyanat = 79,5 : 20,5 (auf Feststoff bezogen)
   Feststoffgehalt der Lacke: 44,5 %
Zweikomponentenlacke (6b und 7b)
   Bindemittel: Polyisocyanat = 66 : 34 (auf Feststoff bezogen)
   Feststoffgehalt der Lacke: 49,2 %

Die Klarlacke und Zweikomponentenlacke wurden den bereits angeführten und folgenden weiteren lacktechnischen Prüfungen unterworfen, deren Ergebnisse in Tabelle 4 zusammengefaßt sind:

Potlife: Der Zweikomponentenlack wird stündlich umgerührt. Dieser Vorgang wird so lange wiederholt, bis die Gelierung einsetzt.

Gelbverfärbung: 200 µm Naßfilm-Schichtstärke auf Ahorn (furniert). Die Beurteilung erfolgt nach einer Lagerung während 4 Wochen bei Raumtemperatur (1 = keine merkbare Verfärbung, 5 = sehr starke Verfärbung)

**Tabelle 4**

| Klarlack | 6 | | | 7 | | |
|---|---|---|---|---|---|---|
| Zweikomponentenlack | | 6a | 6b | | 7a | 7b |
| Klebfreiheit in Minuten | 20 | 25 | 50 | 20 | 25 | 40 |
| Schleifbarkeit | 0 | 0 | MIN | 0 | 0 | MIN |
| Pendelhärte in Sekunden | 75 | 70 | 50 | 70 | 65 | 45 |
| Acetonbeständigkeit in Sekunden | >60 | 80 | 80 | >60 | 70 | 90 |
| Ethanolbeständigkeit in Stunden | >2 | >5 | >8 | >2 | >6 | >10 |
| Wasserbeständigkeit in Stunden | >24 | >36 | >48 | >24 | >36 | >48 |
| Potlife in Stunden | - | >48 | 20 | - | >48 | 25 |
| Gelbverfärbung | 4 | 2 | 1-2 | 4 | 2 | 1-2 |

In Ergänzung zur Tabelle 4 zeigen die Lackfilme der Zweikomponentenlacke 6a, 6b und 7a, 7b im Vergleich zu den Klarlacken 6 und 7 nach einer Trocknungszeit von 4 Wochen bei Raumtemperatur erwartungsgemäß deutlich bessere Ergebnisse in der Beständigkeit gegen Aceton, Ethanol und Wasser.

## Patentansprüche

1. Verfahren zur Herstellung von wäßrigen, selbstvernetzenden Copolymerisatdispersionen, die
(Aa) 3 bis 35 Gew.-%, vorzugsweise 8 bis 15 Gew.-%, Acetoacetylgruppen aufweisende (Meth)acrylatmonomere,
(Ab) 1 bis 20 Gew.-%, vorzugsweise 3 bis 16 Gew.-%, α,β-ethylenisch ungesättigte Carbonsäuren, vorzugsweise (Meth)acrylsäure,
(Ac) 11 bis 96 Gew.-%, vorzugsweise 30 bis 70 Gew.-%, (Meth)acrylsäurealkylester sowie gegebenenfalls Diester der Malein- oder Fumarsäure und
(Ad) 0 bis 40 Gew.-%, vorzugsweise 0 bis 25 Gew.-%, andere radikalisch polymerisierbare Monomere, wie Vinylaromaten, Vinylester, Hydroxyalkyl(meth)acrylate und (Meth)-acrylamid
als Monomeren-Zusammensetzung aufweisen, wobei die Summe der Prozentzahlen der Komponenten (Aa) bis (Ad) 100 ergeben muß, und die mit als Vernetzungskomponente wirkenden Polyaminen neutralisiert sind, dadurch gekennzeichnet, daß man
A) eine zweistufige, radikalische Emulsionpolymerisation durchführt, mit der Maßgabe, daß in der ersten Stufe 60 bis 90 Gew.-% eines Gemisches aus den Monomeren (Aa) bis (Ad) und in der zweiten Stufe 10 bis 40 Gew.-% eines Gemisches aus den Monomeren (Ac) und (Ad) copolymerisiert werden, wobei die Summe der Prozentzahlen wiederum 100 ergeben muß, und die Bedingung gilt, daß die Acrylatcopolymerisate (A) Acetoacetylgruppen in einer Menge von 0,2 bis 1,7 Mol/kg, vorzugsweise von 0,4 bis 0,8 Mol/kg, und Carboxylgruppen in einer Menge von 0,15 bis 1,6 Mol/kg, vorzugsweise von 0,4 bis 0,75 Mol/kg, aufweisen, und daß die Carboxylgruppen in einer Menge von 50 bis 95 Mol-%, vorzugsweise von 80 bis 90 Mol-%, bezogen auf die Acetoacetylgruppen, vorliegen,
und anschließend
B) die Carboxylgruppen der Copolymerisatdispersionen (A) mit Polyaminen, die mindestens zwei primäre Aminogruppen im Molekül aufweisen, in einem Anteil von 50 bis 100 Mol-%, vorzugsweise von 90 bis 100 Mol-%, bezogen auf die gesamten primären Aminogruppen, unter Salzbildung umsetzt.

2. Wäßrige, selbstvernetzende Copolymerisatdispersionen, hergestellt gemäß Anspruch 1.

3. Verwendung der gemäß Anspruch 1 hergestellten wäßrigen, selbstvernetzenden Copolymerisatdispersionen als Bindemittel für lagerstabile Einkomponentenlacke, die bei Raumtemperatur oder bei erhöhter Temperatur vernetzen.

4. Verwendung der gemäß Anspruch 1 hergestellten wäßrigen, selbstvernetzenden Copolymerisatdispersionen, wobei die Monomerenkomponente (Ad) Hydroxyalkyl(meth)acrylate enthalten muß, in Kombination mit niedermolekularen Polyisocyanaten, wobei ein Verhältnis von Copolymerdispersionen zu Polyisocyanaten von 90 : 10 bis 60 : 40 (auf Feststoff bezogen) gewählt wird, als Bindemittel für Zweikomponentenlacke.

## Claims

1. Method of preparing aqueous, autocrosslinking copolymer dispersions whose monomer composition is
(Aa) from 3 to 35% by weight, preferably from 8 to 15% by weight, of (meth)acrylate monomers containing acetoacetyl groups,
(Ab) from 1 to 20% by weight, preferably from 3 to 16% by weight, of α,β-ethylenically unsaturated carboxylic acids, preferably (meth)acrylic acid,
(Ac) from 11 to 96% by weight, preferably from 30 to 70% by weight, of (meth)acrylic alkyl esters and, if desired, diesters of maleic or fumaric acid,
and
(Ad) from 0 to 40% by weight, preferably from 0 to 25% by weight, of other free-radically polymerizable monomers, such as vinylaromatic compounds, vinyl esters, hydroxyalkyl (meth)acrylates and (meth)acrylamide,
the sum of the percentages of components (Aa) to (Ad) necessarily being 100, and the dispersions being neutralized with polyamines which act as a crosslinking component, which method is characterized in that
A) a two-stage free-radical emulsion polymerization is carried out, with the proviso that in the first stage from 60 to 90% by weight of a mixture of the monomers (Aa) to (Ad) and in the second stage from 10 to 40% by weight of a mixture of the monomers (Ac) and (Ad) are copolymerized, the sum of the percentages again necessarily being 100 and the condition holding that the acrylate copolymers (A) contain acetoacetyl groups in an amount of from 0.2 to 1.7 mol/kg, preferably from 0.4 to 0.8 mol/kg, and carboxyl groups in an amount of from 0.15 to 1.6 mol/kg, preferably from 0.4 to 0.75 mol/kg, and that the carboxyl groups are present in an amount of from 50 to 95 mol-%, preferably from 80 to 90 mol-%, relative to the acetoacetyl groups,
and subsequently
B) the carboxyl groups of the copolymer dispersions (A) are reacted with polyamines which contain at least two primary amino groups in the molecule, in a proportion of from 50 to 100 mol-%, preferably from 90 to 100 mol-%, relative to the total primary amino groups, with salts being formed.

2. Aqueous, autocrosslinking copolymer dispersions prepared according to Claim 1.

3. Use of the aqueous, autocrosslinking copolymer dispersions prepared according to Claim 1 as binders for storage-stable one-component coating materials which crosslink at room temperature or at elevated temperature.

4. Use of the aqueous, autocrosslinking copolymer dispersions prepared according to Claim 1, the monomer component (Ad) necessarily containing hydroxyalkyl (meth)acrylates, in combination with low molecular mass polyisocyanates, where a ratio of copolymer dispersions to polyisocyanates of from 90 : 10 to 60 : 40 (based on solids) is chosen, as binders for two-component coating materials.

## Revendications

1. Procédé de préparation de dispersions aqueuses de copolymères autoréticulants, qui ont comme composition de monomères
(Aa) 3 à 35 % en masse, de préférence 8 à 15 % en masse, de monomères (méth)acrylate contenant des groupes acétoacétyle,
(Ab) 1 à 20 % en masse, de préférence 3 à 16 % en masse, d'acides carboxyliques à insaturation α,β-éthylénique, de préférence l'acide (méth)acrylique,
(Ac) 11 à 96 % en masse, de préférence 30 à 70 % en masse, de (méth)acrylates d'alkyle et éventuellement de diesters de l'acide maléique ou fumarique, et
(Ad) 0 à 40 % en masse, de préférence 0 à 25 % en masse, d'autres monomères susceptibles de subir une polymérisation radicalaire, comme des composés vinyliques aromatiques, des esters vinyliques, des (méth)acrylates d'hydroxyalkyle et le (méth)acrylamide,
la somme des pourcentages des constituants (Aa) à (Ad) devant être égale à 100, et qui sont neutralisés avec des polyamines ayant un effet d'agent de réticulation, caractérisé en ce que
A) on effectue une polymérisation en émulsion radicalaire en deux étapes, sous réserve que l'on copolymérise dans la première étape 60 à 90 % en masse d'un mélange des monomères (Aa) à (Ad), et, dans la seconde étape, 10 à 40 % en masse d'un mélange d'un mélange des monomères (Ac) et (Ad), la somme des pourcentages devant de nouveau être égale à 100, et à condition que les copolymères d'acrylate (A) contiennent des groupes acétoacétyle en une quantité de 0,2 à 1,7 mol/kg, de préférence de 0,4 à 0,8 mol/kg, et des groupes carboxyle en une quantité de 0,15 à 1,6 mol/kg, de préférence de 0,4 à 0,75 mol/kg, et que la quantité de groupcs carboxyle soit de 50 à 95 % en mol, de préférence de 80 à 90 % en mol, par rapport aux groupes acétoacétyle,
puis
B) on fait réagir en formant des sels les groupes carboxyle des dispersions de copolymères (A) avec des polyamines contenant au moins deux groupes amino primaires dans la molécule, en une quantité de 50 à 100 % en mol, de préférence de 90 à 100 % en mol, par rapport au total des groupes amino primaires.

2. Dispersions aqueuses de copolymères autoréticulants, préparées selon la revendication 1.

3. Utilisation des dispersions aqueuses de copolymères autoréticulants préparées selon la revendication 1 comme liants pour des vernis à un composant stables au stockage qui se réticulent à la température ambiante ou à température élevée.

4. Utilisation des dispersions aqueuses de copolymères autoréticulants préparées selon la revendication 1, dans lesquelles le constituant monomère (Ad) doit contenir des (méth)acrylates d'hydroxyalkyle, en combinaison avec des polyisocyanates de faible masse molaire, le rapport des dispersions de copolymères aux polyisocyanates étant de 90 : 10 à 60 : 40 (rapporté à la matière solide), comme liant pour des vemis à deux composants.
